# EUROPÄISCHE PATENTSCHRIFT

(11) **EP 1 244 722 B1**
(45) Veröffentlichungstag und Bekanntmachung des Hinweises auf die Patenterteilung: **20.02.2008**
(21) Anmeldenummer: 00988708.4
(22) Anmeldetag: 16.11.2000
(51) Int. Cl.: C08F 290/06

(54) **VERFAHREN ZUR HERSTELLUNG VON WASSERLÖSLICHEN POLYMERISATEN VON ESTERN AUS ETHYLENISCH UNGESÄTTIGTEN CARBONSÄUREN UND POLYALKYLENGLYKOLEN**
METHOD FOR PRODUCING WATER SOLUBLE POLYMERS OF ESTERS FROM ETHYLENICALLY UNSATURATED CARBOXYLIC ACIDS AND POLYALKYLENE GLYCOLS
PROCEDE DE PRODUCTION DE POLYMERISATS D'ESTERS HYDROSOLUBLES A PARTIR D'ACIDES CARBOXYLIQUES ETHYLENIQUEMENT INSATURES ET DE POLYALKYLENE GLYCOLS

(30) Priorität: 27.11.1999 DE 19957177
(43) Veröffentlichungstag der Anmeldung: 02.10.2002
(73) Patentinhaber: BASF Aktiengesellschaft, 67056 Ludwigshafen (DE)
(72) Erfinder: KRONER, Matthias, 67304 Eisenberg (DE); BÜCHNER, Karl-Heinz, 68804 Altlussheim (DE); PERNER, Johannes, 67434 Neustadt (DE); RAUBENHEIMER, Hans-Jürgen, 68775 Ketsch (DE); FAUL, Dieter, 67150 Niederkirchen (DE)
(86) Internationale Anmeldenummer: PCT/EP2000/011343
(87) Internationale Veröffentlichungsnummer: WO 2001/040337

(56) Entgegenhaltungen:
- EP-A- 0 884 290
- US-A- 4 138 381
- US-A- 4 429 097

## Beschreibung

Die Erfindung betrifft ein Verfahren zur Herstellung von wasserlöslichen Polymerisaten von Estern aus ethylenisch ungesättigten Carbonsäuren und Polyalkylenglykolen durch azeotropes Verestern in Gegenwart von organischen Lösemitteln, die mit Wasser ein Azeotrop bilden, von ethylenisch ungesättigten Carbonsäuren mit Polyalkylenglykolen, die einseitig endgruppenverschlossen sind, zu mindestens 85 Gew.-% und anschließende radikalische Polymerisation der so erhältlichen Ester gegebenenfalls zusammen mit anderen ungesättigten Monomeren in wäßrigem Medium.

Das eingangs beschriebene Verfahren zur Herstellung von wasserlöslichen Polymerisaten von Estern aus ethylenisch ungesättigten Carbonsäuren und Polyalkylenoxiden durch azeotropes Verestern und anschließende Polymerisation der Monomeren ist aus der EP-A-0 884 290 bekannt. Bei der azeotropen Veresterung werden hohe Umsätze erzielt. Das dabei verwendete Schleppmittel wird vor der Polymerisation der Monomeren entfernt. Das Abdestillieren des organischen Lösemittels aus dem bei der Veresterung anfallenden Gemisch ist zeitaufwendig. Außerdem wird dabei nichtumgesetzte ethylenisch ungesättigte Carbonsäure wie beispielsweise Methacrylsäure, azeotrop aus dem Reaktionsgemisch entfernt.

Der vorliegenden Erfindung liegt die Aufgabe zugrunde, die Raum-Zeit-Ausbeute bei dem eingangs beschriebenen Verfahren zu erhöhen und Polymerisate zur Verfügung zu stellen, die einen geringen Restgehalt an organischem Lösemittel aufweisen.

Die Aufgabe wird erfindungsgemäß gelöst mit einem Verfahren zur Herstellung von wasserlöslichen Polymerisaten von Estern aus ethylenisch ungesättigten Carbonsäuren und Polyalkylenoxiden durch azeotropes Verestern in Gegenwart von organischen Lösemitteln, die mit Wasser ein Azeotrop bilden, von ethylenisch ungesättigten Carbonsäuren mit Polyalkylenoxiden, die einseitig endgruppenverschlossen sind, zu mindestens 85 Gew.-% und anschließende radikalische Polymerisation der so erhältlichen Ester gegebenenfalls zusammen mit anderen ethylenisch ungesättigten Monomeren in wäßrigem Medium, wenn man die organischen Lösemittel während der Polymerisation azeotrop aus dem Reaktionsgemisch abdestilliert und das abdestillierte Wasser zurückführt oder die Menge an abdestilliertem Wasser im Reaktionsgemisch durch Zufuhr von frischem Wasser ersetzt.

Der Gehalt an organischem Lösemittel in der Monomerlösung kann bis zu 30 Gew.-% betragen. Man kann jedoch auch einen Teil des Lösemittels im Anschluß an die Veresterung aus dem Reaktionsgemisch entfernen, so daß der Gehalt an organischem Lösemittel in der Monomerlösung 1 bis 5 Gew.-% beträgt.

Geeignete ethylenisch ungesättigte Carbonsäuren enthalten beispielsweise 3 bis 10 Kohlenstoffatome. Sie werden im ersten Verfahrensschritt azeotrop verestert. Geeignete ethylenisch ungesättigte Carbonsäuren sind beispielsweise Acrylsäure, Methacrylsäure, Crotonsäure, Vinylessigsäure, Maleinsäure, Maleinsäureanhydrid, 1,2,3,6-Tetrahydrophthalsäureanhydrid, 3,6-Epoxy-1,2,3,6-tetrahydrophthalsäureanhydrid, 5-Norbornen-2,3-dicarboxylsäureanhydrid, Bicylo[2,2,2]-5-octene-2,3-dicarboxylanhydrid, 3-Methyl-1,2,6-tetrahydrophthalsäureanhydrid, 2-Methyl-1,3,6-tetrahydrophthalsäureanhydrid, Itaconsäure, Mesaconsäure, Fumarsäure und Citraconsäure.

Bevorzugt eingesetzte ethylenisch ungesättigte Carbonsäuren sind Acrylsäure, Methacrylsäure, Maleinsäure, Maleinsäureanhydrid und Fumarsäure.

Die azeotrope Veresterung der monoethylenisch ungesättigten Carbonsäuren mit den einseitig endgruppenverschlossenen Polyalkylenglykolen erfolgt in Gegenwart von organischen Lösemitteln, die mit Wasser ein Azeotrop bilden, nach bekannten Verfahren. Die organischen Lösemittel werden auch als Schleppmittel bezeichnet. Bei der azeotropen Veresterung wird das bei der Reaktion entstehende Wasser azeotrop aus dem Reaktionsgemisch entfernt und die Veresterung mindestens soweit geführt, bis ein Umsatz von 85, vorzugsweise mindestens 90 %, bezogen auf die einseitig verschlossenen Polyethylenglykole, erreicht ist. Der Umsatz kann dabei anhand der Abnahme der Säurezahl oder anhand der Abnahme der OH-Zah1 der Alkylpolyalkylenglykole verfolgt werden. Außerdem besteht nach der Polymerisation die Möglichkeit, mit Hilfe von Gelpermeationschromatographie-Untersuchungen (GPC-Untersuchungen) den unveresterten Anteil an Alkylpolyalkylenglykolen neben dem Polymer zu ermitteln.

Als Alkylpolyalkylenglykole können z.B. Verbindungen der allgemeinen Formel

R¹-O-(CHR²-CHR³)ₙ-OH oder R¹-(O-CH₂-CH₂-CH₂-CH₂)ₙ-OH

verwendet werden,
wobei
- R¹ -: C₁- bis C₅₀-Alkyl oder C₁- bis C₁₈-Alkylphenyl
- R² -: H, C₁- oder C₂-Alkyl
- R³ =: H, C₁- oder C₂-Alkyl und
- n =: 2 bis 300
ist.

Das Molgewicht der Alkylpolyalkylenglykole kann bis zu 10.000 betragen, bevorzugt werden Molgewichte von 100 bis 2.000. Die Anzahl der Alkylerglykoleinheiten in den Verbindungen der Formeln I und II beträgt meistens bis zu 230, wobei bevorzugt 3 bis 40 Alkylenoxideinheiten pro Molekül enthalten sind.

Beispiele für einzelne Alkylpolyalkylenglykole sind
Methylpolyethylenglykol mit Molgewicht 350
Methylpolyethylenglykol mit Molgewicht 500
Methylpolyethylenglykol mit Molgewicht 750
Methylpolyethylenglykol mit Molgewicht 1000
Methylpolyethylenglykol mit Molgewicht 1500
Methylpolyethylenglykol mit Molgewicht 2000
Methylpolyethylenglykol mit Molgewicht 4000
Methylpolyethylenglykol mit Molgewicht 10.000

Die Methylpolyalkylenglykole können auch Einheiten von Propylenoxid oder Butylenoxid in Kombination mit Einheiten von Ethylenoxid enthalten. Die Kombinationen können blockweise oder statistisch angeordnet sein. Beispiele hierfür sind Methylpolyalkylenglykole, die durch Anlagerung von Ethylenoxid und 1 Mol Propylenoxid an 1 Mol Methanol oder durch Reaktion von
5 Mol Ethylenoxid und 3 Mol Propylenoxid bzw.
5 Mol Ethylenoxid und 10 Mol Propylenoxid
10 Mol Ethylenoxid und 1 Mol Propylenoxid
10 Mol Ethylenoxid und 3 Mol Propylenoxid
10 Mol Ethylenoxid und 10 Mol Propylenoxid
20 Mol Ethylenoxid und 1 Mol Propylenoxid
20 Mol Ethylenoxid und 3 Mol Propylenoxid
20 Mol Ethylenoxid und 10 Mol Propylenoxid
25 Mol Ethylenoxid und 1 Mol Propylenoxid
25 Mol Ethylenoxid und 3 Mol Propylenoxid
25 Mol Ethylenoxid und 10 Mol Propylenoxid
mit jeweils 1 Mol Methanol, Ethanol, n-Propanol, Isopropanol oder Butanol erhältlich sind.

Es kann auch teilverethertes Polytetrahydrofuran eingesetzt werden, das einseitig als Endgruppe eine Alkylgruppe trägt, vorzugsweise eine C₁- bis C₄-Alkylgruppe.

Die Veresterung wird so ausgeführt, daß das Mol-Verhältnis von ungesättigten Carbonsäuren zu Alkylpolyalkylenglykol 1:1 bis 10:1, bevorzugt 1:1 bis 5:1, beträgt. Überschüssige Carbonsäure kann in der Veresterungsmischung verbleiben. Bei Bedarf kann sie daraus durch Destillation oder Extraktion entfernt werden.

Für die Veresterung kann vorteilhaft ein Katalysator verwendet werden, sie kann aber auch ohne Katalysator durchgeführt werden. Es kann aber auch vorteilhaft sein, die Veresterung in Abwesenheit eines Katalysators vorzunehmen, weil Polyalkylenglykole durch Säuren gespalten werden und die Spaltprodukte zu unerwünschten Begleitreaktionen führen können.

Als Katalysator können alle organischen und anorganischen Säuren eingesetzt werden. Beispiele sind Schwefelsäure, schweflige Säure, Di- und Polyschwefelsäure, Schwefeltrioxid, Methansulfonsäure, Benzolsulfonsäure, p-Toluolsulfonsäure, C₂- bis C₃₀-Alkylbenzolsulfonsäuren, Schwefelsäuremonoester von C₁- bis C₃₀-Alkoholen, Schwefelsäuremonoester von Alkylpolyalkylenglykolen, Phosphorsäure, phosphorige Säure, unterphosphorige Säure, Polyphosphorsäure, Chlorwasserstoffsäure, Perchlorsäure und saure Ionenaustauscher.

Die Menge an Katalysator, bezogen auf die gesamte Reaktionsmischung, beträgt beispielsweise 0 bis 10 Gew.-%, bevorzugt 0,05 bis 7 Gew.-% und besonders bevorzugt 0,1 bis 5 Gew.-%.

Als Schleppmittel geeignete organische Lösemittel sind aliphatische, cycloaliphatische, isoaliphatische, linearaliphatische, aliphatisch-aromatische und rein aromatische Kohlenwasserstoffe. Die Siedepunkte der Schleppmittel liegen z. B. zwischen 60°C und 300°C, bevorzugt zwischen 70°C und 150°C. Es können auch technische Mischungen aus verschiedenen Schleppmitteln verwendet werden. Solche Mischungen bewirken oft einen Siedebereich. Solche Mischungen werden auch als Spezialbenzine, Petroleumbenzin, Siedegrenzenbenzine, Naphtha oder Petrolether-Fraktionen bezeichnet. Solche Mischungen fallen oft als Raffineriefraktion an. Sie können durch Oligomerisierungen und Hydrierungen gezielt aus Steamcracker-Olefinen hergestellt werden.

Beispiele für solche Siedegrenzenbenzine sind z.B. Benzine mit den Siedebereichen zwischen 90°C und 100°C, zwischen 100°C und 140°C oder zwischen 140°C und 160°C.

Es handelt sich meist um Alkangemische.

Die Fraktionen können je nach Herkunft rein n-aliphatische, isoaliphatische, aliphatisch-aromatische oder rein aromatische Bestandteile enthalten.

Als Schleppmittel sind alle Kohlenwasserstoffgemische geeignet. Eine Übersicht zu den technisch zugänglichen Kohlenwasserstoffgemischen ist bspw. zu finden in Kirk-Othmer, Encyclopedia of Chemical Technology, 1995, Vol. 13, Seiten 744 ff, Kapitel Hydrocarbons oder ebenda Vol. 12, Seiten 126 ff, Kapitel Fuels und Vol. 12, Seiten 341 ff. Kapitel Gasoline. Eine weitere Übersicht über Kohlenwasserstoffgemische findet sich in Ullmann's Encyclopedia of Industrial Chemistry, 1989 Vol. A 13, Seiten 227-281 im Kapitel Hydrocarbons, sowie ebenda in Vol. A 16, Seiten 719-755 in Kapitel Motor Fuels.

Die Schleppmittel bilden zusammen mit Wasser ein azeotropes Gemisch, das in der Regel einen Siedepunkt unter dem des niedrige= siedenden Bestandteiles besitzt. Die Siedepunkte der azeotropen Gemische liegen z.B. besonders bevorzugt zwischen 70°C und 130°C.

Beispiele für Schleppmittel sind n-Paraffine wie Hexan, Decan, Undecan, Dodecan, Octadecan, Iso-Paraffine wie Isooctan, Isodecan, Isododecan, Isohexadecan, Isooctadecan, Cycloparaffine wie Cyclohexan, Methylcyclohexan, Dimethylcyclohexan, Aromaten wie Benzol, Toluol, o-, m- und p-Xylol, Xylolgemische, Trimethylbenzol, Tetramethylbenzol, Mesitylen, Ethylbenzol, Isopropylbenzol, n-Butylbenzol, Isobutylbenzol. Bevorzugt sind Cyclohexan, Methylcyclohexan, Toluol, Xylolgemische und o-Xylol. Besonders bevorzugt ist Toluol. Der Anteil an Schleppmittel in der Reaktionsmischung beträgt 5 bis 50 Gew.-%, bevorzugt 10 bis 25 Gew.-%, bezogen auf die Summe aus ungesättigter Carbonsäure und Alkylpolyalkylenglykol.

Der Anteil an Schleppmittel in der Reaktionsmischung wird erfindungsgemäß so gewählt, daß das Schleppmittel in der Reaktionsmischung einen Siedepunkt von 100 bis 150°C, bevorzugt zwischen 110 und 140°C besitzt. Die Siedepunkte der Azeotrope und der Schleppmittel sind in der Mischung meist höher als die der reinen Substanzen.

Um das einseitig endgruppenverschlossene Polyalkylenglykol während der Veresterung vor oxidativem Abbau zu schützen, können Reduktionsmittel in Mengen bis zu 5 Gew.-%, bevorzugt bis 2 Gew.-%, bezogen auf die Reaktionsmischung, anwesend sein. Als Reduktionsmittel werden z.B. Phosphorderivate wie hypophosphorige Säure, phosphorige Säure, Schwefeldioxid, Thiosulfat und/oder Dithionit eingesetzt. Auf Reduktionsmittel kann jedoch auch verzichtet werden.

Um die vorzeitige Polymerisation der ungesättigten Säuren und deren Ester zu verhindern, werden übliche Polymerisationsinhibitoren wie beispielsweise Phenothiazin, Hydrochinonmonomethylether oder Di-tert.-butyl-para-Kresol eingesetzt. Die Mengen an Inhibitoren betragen beispielsweise 0,001 bis 2 Gew.-%, bevorzugt 0,005 bis 0,5 Gew.-%.

Die Veresterung wird beispielsweise bei Temperaturen von 80 bis 200°C durchgeführt. Bevorzugt werden Temperaturen von 90 bis 170°C, besonders bevorzugt 110.bis 140C.

Zum Inertisieren wird üblicherweise Stickstoff verwendet.

Leitet man beispielsweise während der Veresterung einen Stickstoffstrom durch die Reaktionsmischung, so wird das Abdestillieren des Azeotropes unterstützt. Man leitet beispielsweise bevorzugt pro Stunde die 0,1 bis 5-fache, bevorzugt die 0,5 bis 2-fache Menge des Reaktorinhaltes an Stickstoff durch die Veresterungsmischung.

Das Azeotrop wird in einem Wärmetauscher kondensiert und in einem Phasentrenngefäß in eine obere organische Phase und eine untere Wasserphase getrennt. Durch entsprechende Rohrleitungsführung wird die obere organische Phase wieder in den Veresterungsreaktor zurückgeführt.

Die Veresterung kann verfolgt werden, indem die gebildete Menge Wasser ermittelt wird und/oder indem die Säurezahl des Reaktionsgemisches an Proben titrimetrisch ermittelt wird. Die Veresterung wird so weit geführt, bis die Säurezahl nicht mehr abnimmt oder die Wassermenge nicht mehr zunimmt. Je nach Alkoxylierungsgrad benötigt man dafür unterschiedliche Zeiten. Je höher der Alkoxylierungsgrad ist, um so länger sind die benötigten Veresterungszeiten. Beispielsweise benötigt man mit 17 Gew.-% Toluol als Schleppmittel bei 130°C folgende Veresterungszeiten, um mindestens 85 % Umsatz zu erreichen:

| Alkylpolyalkylenglykol | Veresterungszeit in Stunden |
|---|---|
| Methylpolyethylenglykol mit Molmasse 350 | 4 |
| Methylpolyethylenglykol mit Molmasse 500 | 5 |
| Methylpolyethylenglykol mit Molmasse 750 | 7 |
| Methylpolyethylenglykol mit Molmasse 1000 | 8 |
| Methylpolyethylenglykol mit Molmasse 2000 | 12 |

Nach Beendigung der Veresterung verbleibt das Schleppmittel in der Reaktionsmischung oder wird durch Destillation bis auf einen Restgehalt von 1-5 Gew.-% entfernt. In einer bevorzugten Ausführungsform wird das Schleppmittel nicht entfernt und die Veresterungsprodukte, die ca. 10 bis 30 Gew.-% Schleppmittel enthalten, in einem Lagerbehälter bis zur Verwendung bei der Polymerisation aufbewahrt. Die Lagerung kann bei 10 bis 50°C unter Stickstoff oder Stickstoff/Luft-Gemischen erfolgen. Das Gemisch ist gut pumpfähig und besitzt z.B. bei 30°C eine Viskosität von ca. 30 mPas, bei 60°C eine Viskosität von ca. 15 mPas. Durch das Schleppmittel wird die Kristallisationstemperatur des Esters gesenkt, so daß eine Lagerung bei niedrigeren Temperaturen möglich ist. Je niedriger die Lagertemperatur ist, um so länger ist der Ester lagerfähig.

Als Apparate eignen sich beispielsweise alle üblicherweise verwendeten Destillationsapparate, beispielsweise Rührkesselreaktoren, Blasendestillationsapparate mit und ohne Umwälzkreis, Dünnschichtverdampfer, Fallfilmverdampfer oder Rohrbündelverdampfer. Die Durchführung der Veresterung unter vermindertem Druck, z.B. bei 1 bis 900 mbar ist oft hilfreich, um die Temperaturbelastung des Veresterungsproduktes zu reduzieren. Wenn eine gut wirksame Vakuumeinrichtung verwendet wird, wie bspw. Wälzkolbenverdichter oder Drehschieberpumpen, so kann der Druck auf ca. 1 mbar reduziert werden. Mit anderen Vakuumeinrichtungen, beispielsweise Dampfstrahlern oder Wasserringpumpen werden Drücke von 10 bis 100 mbar erreicht.

Der Gehalt an Schleppmittel im Reaktionsgemisch, das nach der Veresterung der Carbonsäuren vorliegt, kann durch Abdestillieren des Schleppmittels relativ schnell auf eine Konzentration von ca. 1 bis 5 Gew.-% erniedrigt werden. Dagegen ist die vollständige Abtrennung des Schleppmittels aus dem bei der Veresterung anfallenden Reaktionsgemisch mit Hilfe einer einfachen Destillation sehr zeitaufwendig und gelingt nicht quantitativ. Da die Schleppmittel die Polymerisation nicht stören, können geringe Mengen an Schleppmittel im Monomeren verbleiben und zu einem späteren Zeitpunkt entfernt werden. Die Polymerisation des Veresterungsproduktes erfolgt in wäßrigem Medium. Vorzugsweise führt man die Polymerisation in reinem Wasser durch oder verwendet Mischungen aus Wasser und C₁- bis C₄-Alkoholen. Die Konzentration der Polymerisate in der wäßrigen Lösung beträgt beispielsweise 20 bis 70, vorzugsweise 30 bis 50 Gew.-%.

Nach dem erfindungsgemäßen Verfahren werden besonders bevorzugt Copolymerisate von Estern aus ethylenisch ungesättigten Carbonsäuren und einseitig endgruppenverschlossenen Polyalkylenglykolen hergestellt. Solche Copolymerisate werden beispielsweise als Dispergiermittel für anorganische Feststoffe, insbesondere als Betonverflüssiger verwendet. Bei der Copolymerisation werden vorzugsweise
(a) Ester der Formel 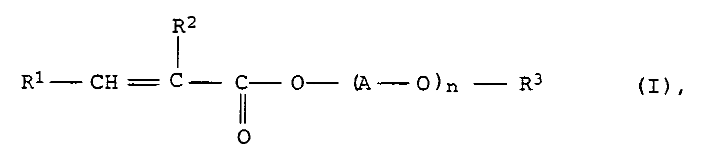 in der
   - R¹,R²: gleich oder verschieden sind und H oder CH₃ bedeuten
   - A: eine Alkylengruppe mit 2 bis 4 C-Atomen oder -CH₂-CH₂-CH₂-CH₂- ist,
   - R³: für C₁- bis C₅₀-Alkyl oder C₁- bis C₁₈-Alkylphenyl steht und
   - n: eine Zahl von 2 bis 300 ist,
   und
(b) mindestens eine monoethylenisch ungesättigte Carbonsäure oder deren Salze eingesetzt. Die Monomeren (a) und (b) werden vorzugsweise im Gewichtsverhältnis 98:2 bis 2:98 copolymerisiert. Von besonderem Interesse ist dabei die Copolymerisation von
   (a) Acrylsäure- oder Methacrylsäureestern von einseitig mit C₁-bis C₄-Alkylendgruppen verschlossenen Polyalkylenglykolen mit Molmassen von 100 bis 10 000 und
   (b) Acrylsäure und/oder Methacrylsäure.

Von besonderer technischer Bedeutung ist die Herstellung von Copolymerisaten aus
(a) Estern aus Methacrylsäure und Methylpolyethylenglykol mit Molmassen von 100 bis 10 000 und
(b) Methacrylsäure.

Als Polymerisationsinitiatoren können alle bekannten wasserlöslichen Peroxo- und Azoinitiatoren eingesetzt werden. Besonders bevorzugte Polymerisationsinitiatoren sind Wasserstoffperoxid sowie Natrium-, Kalium- und Ammoniumperoxodisulfat. Die Mengen an Initiatoren betragen beispielsweise 0,1 bis 10, vorzugsweise 0,5 bis 5 Gew.-%, bezogen auf die bei der Polymerisation eingesetzten Monomeren.

Das Molekulargewicht der Polymerisate kann mit Hilfe von Polymerisationsreglern gezielt eingestellt werden. Als Polymerisationsregler werden beispielsweise wasserlösliche Schwefel-, Stickstoff- und Phosphorverbindungen verwendet. Beispiele für Polymerisationsregler sind Natriumhydrogensulfit, Natriumdisulfit, Natriumthiosulfat, Natriumhypophosphit, phosphorige Säure, Mercaptopropionsäure, Mercaptoessigsäure, Mercaptoethanol, Alkalimetallsalze der genannten Säuren oder Mischungen der genannten Polymerisationsregler. Die bei der Polymerisation verwendeten Mengen an Polymerisationsregler betragen beispielsweise 0,1 bis 10, vorzugsweise 1 bis 5 Gew.-%, bezogen auf die bei der Polymerisation eingesetzten Monomeren.

Das bei der Veresterung erhaltene wasserfreie Reaktionsprodukt kann alleine oder vorzugsweise zusammen mit anderen Monomeren polymerisiert werden. Die Polymerisation kann kontinuierlich oder diskontinuierlich durchgeführt werden. Bei einer Batch-Fahrweise legt man beispielsweise Wasser als Polymerisationsmedium in einem Kessel vor, der mit einer Mischvorrichtung, Rückflußkühler und Wasserabscheider ausgestattet ist, erhitzt es auf die Polymerisationstemperatur und nach dem Starten der Polymerisation kontinuierlich oder absatzweise das Veresterungsprodukt, einen Inititator und gegebenenfalls einen Regler zu. Die Polymerisation kann bei Normaldruck, unter erhöhtem Druck oder auch unter vermindertem Druck durchgeführt werden. Sie erfolgt in allen Fällen unter Sieden des Reaktionsgemisches. Gemäß der vorliegenden Erfindung wird entweder das gesamte bei der Veresterung verwendete Schleppmittel oder - soweit ein Teil des Schleppmittels bereits vorher entfernt worden ist - der im polymerisierbaren Gemisch verbliebene Teil des Schleppmittels während der Polymerisation azeotrop aus dem Reaktionsgemisch abdestilliert und das abdestillierte Wasser zurückgeführt. Man kann jedoch auch die Menge an abdestilliertem Wasser im Reaktionsgemisch durch Zufuhr von frischem Wasser ersetzen. Dadurch wird gewährleistet, daß die Konzentration an Wasser im Reaktionsgemisch während der Polymerisation praktisch konstant bleibt. Das bei der Veresterungsreaktion verwendete Schleppmittel verteilt sich im Polymerisationsreaktor auf eine relativ große Fläche und wird daher rasch aus dem System entfernt. Das Azeotrop wird kondensiert, in 2 Phasen getrennt und die wäßrige Phase zurückgeführt oder entsorgt. Auf diese Weise wird das Schleppmittel in dem Maße, wie es mit dem Veresterungsprodukt in die Polymerisationszone eindosiert wird, zusammen mit Wasser destillativ als azeotropes Gemisch aus dem Polymerisationsreaktor entfernt. Die stationäre Konzentration an Schleppmittel im Polymerisationsreaktor ist deshalb gering und hat keine negativen Auswirkungen auf die Polymerisation. Das bei der Polymerisation abdestillierte Schleppmittel kann bei der Veresterung wieder verwendet werden. Sollte eine Reinigung notwendig sein, so kann es beispielsweise mit Hilfe einer Flüssig-flüssig-Extraktion mit Wasser gereinigt werden. Das Schleppmittel kann jedoch auch destilliert oder einer Wasserdampfdestillation unterworfen werden, bevor es wieder bei der Veresterung eingesetzt wird.

Bei der oben beschriebenen Batch-Fahrweise kann man die Monomeren, den Initiator und ggf. den Regler innerhalb von 1 bis 20, bevorzugt 2 bis 10 Stunden dem Reaktor zuführen. Nach Beendigung der Dosierung wird das Reaktionsgemisch beispielsweise noch 0,1 bis 10, bevorzugt 0,5 bis 3 Stunden nachpolymerisiert. Die Nachpolymerisation wird vorzugsweise ebenfalls unter Sieden des Reaktionsgemisches durchgeführt. Dabei können ggf. Reste an Schleppmittel aus dem Polymerisationsgemisch herausdestilliert werden. Nach der Polymerisation beträgt der Anteil an organischem Lösemittel in der wäßrigen Polymerisatlösung vorzugsweise weniger als 100 ppm. Nach dem erfindungsgemäßen Verfahren ist es sogar möglich, das Schleppmittel vollständig aus der bei der Polymerisation erhaltenen Mischung zu entfernen. Die Restgehalte an Schleppmittel in der Polymerisationslösung betragen beispielsweise 0 bis 50, meistens 1 bis 30 ppm.

Um die Raum-Zeit-Ausbeute bei der Polymerisation durch ein schnelleres azeotropes Abdestillieren des Schleppmittels zu erhöhen, kann es vorteilhaft sein, Stickstoff oder Wasserdampf in den Polymerisationsreaktor einzuleiten. Dadurch wird die Destillationsgeschwindigkeit des Azeotrops erhöht.

Sofern man Copolymerisate herstellt, die als Comonomer eine monoethylenisch ungesättigte Carbonsäure einpolymerisiert enthalten, kann man vor, während oder nach der Polymerisation eine Base zur Neutralisation zusetzen. Man kann sämtliche basisch reagierenden Stoffe verwenden, z.B. Alkalimetalloxide, Alkalimetallhydroxide, Alkalimetallcarbonate, Alkalimetallhydrogencarbonate, Magnesiumoxid, Calciumoxid, Bariumoxid, die entsprechenden Erdalkalimetallhydroxide, Aluminiumhydroxid, Eisenhydroxid, Eisenoxid, Ammoniak und Amine wie Cyclohexylamin, Dicyclohexylamin, Butylamin, Ethanolamin, Diethanolamin, Triethanolamin und Morpholin. Bevorzugt wird Natriumhydroxid in Form von 10 bis 50 Gew.-%igen wäßrigen Lösungen zur Neutralisation der Säuregruppen der Comonomeren verwendet.

Die bei der Veresterung eingesetzten einseitig endgruppenverschlossenen Polyalkylenglykolether können bis zu 5 Gew.-% Diolanteil enthalten. Der Gehalt an Polyalkylenglykolen in den einseitig endgruppenverschlossenen Polyalkylenglykolethern liegt vorzugsweise in dem Bereich von 0,1 bis 3 Gew.-%. Die Copolymerisation der einseitig endgruppenverschlossenen Polyalkylenglykolether-Ester der Formel I kann beispielsweise auch mit Sulfonsäuregruppen enthaltenden Monomeren wie Natriumvinylsulfonat, 2-Acrylamido-2-methyl-propansulfonsäure oder Methallylsulfonsäure vorgenommen werden. Die Sulfogruppen enthaltenden Monomeren können ggf. in Mischung mit anderen Monomeren wie Acrylsäure oder Methacrylsäure bei der Copolymerisation der Ester der Formel I mitverwendet werden. Weitere geeignete Comonomere für die Verbindungen der Formel I sind z.B. Vinylacetat, Styrol, C₁- bis C₂₅-Alkylacrylate oder -methacrylate, Vinylpyrrolidon, Acrylamid, Methacrylamid, Hydroxyalkylacrylate oder -methacrylate wie Hydroxypropylmethacrylat, Hydroxyethylacrylat, Hydroxyethylmethacrylat und Glycidylmethacrylat.

Nach dem erfindungsgemäßen Verfahren erhält man wäßrige Polymerisatlösungen, die entweder kein organisches Lösemittel oder nur geringe Mengen eines organischen Lösemittels enthalten. Gegenüber dem aus EP-A-0 884 290 beschriebenen Verfahren ist bei dem erfindungsgemäßen Verfahren die Raum-Zeit-Ausbeute bei vergleichbarer Produktqualität erheblich gesteigert. Die nach dem erfindungsgemäßen Verfahren erhältlichen Polymerisate sind hervorragende Betonverflüssiger. Erfindungsgemäß kann die Polymerisation auch bei höheren Konzentrationen durchgeführt werden, ohne dadurch die Wirksamkeit der Polymeren als Betonverflüssiger zu erniedrigen. Die Konzentration der Polymerisate in der Reaktionsmischung kann bis zu 70 Gew.-% betragen. Meistens werden wäßrige Polymerlösungen mit Konzentrationen von 30 bis 60 Gew.-% hergestellt.

Die Prozentangaben in den Beispielen bedeuten Gewichtsprozent. Der Umsatz bei der Veresterung wurde mit Hilfe der NMR-Spektroskopie bestimmt. Der K-Wert der Polymerisate wurde nach H. Fikentscher, Cellulose-Chemie, Band 13, 58-64 und 71 bis 74 (1932) in wäßriger Lösung bei einem pH-Wert von 7, einer Temperatur von 25°C und einer Polymerkonzentration des Natriumsalzes des Copolymerisats von 1 Gew.-% bestimmt.

### Ester 1

In einem 2-Liter fassenden Reaktor mit Gaseinleitungsrohr und Wasserabscheider wurden 478 g (0,478 mol) Methylpolyethylenglykol mit einem Molgewicht von 1000 , 167 g (1,94 mol) Methacrylsäure, 1,9 g einer 50%igen wäßrigen hypophosphorigen Säure, 0,08 g Phenothiazin, 4,1 g p-Toluolsulfonsäure und 130 g Toluol eingefüllt und unter Durchleiten von Stickstoff für 13 Stunden auf eine Temperatur von 130°C aufgeheizt. Das entstandene Wasser wurde im Wasserabscheider abgetrennt und das Toluol in den Reaktor zurückgeleitet. Die Säurezahl der Reaktionsmischung betrug 114 mg KOH/g, der Umsatz des Methylpolyethylglykols 95%.

### Ester 2

wurde wie Ester 1, jedoch mit der einzigen Ausnahme hergestellt, daß man 19,5 g p-Toluolsulfonsäure verwendete. Die Säurezahl der Reaktionsmischung betrug 130 mg KOH/g, der Umsatz des Methylpolyethylglykols 97%.

### Ester 3

wurde wie Ester 1, jedoch mit der Ausnahme hergestellt, daß man 123 g (1,43 mol) Methacrylsäure verwendete. Die Säurezahl der Reaktionsmischung betrug 78 mg KOH/g, der Umsatz des Methylpolyethylenglykols 95%.

### Ester 4

wurde wie Ester 1 hergestellt, jedoch mit der Ausnahme, daß man 82 g (0,96 mol) Methacrylsäure einsetzte. Die Säurezahl der Reaktionsmischung betrug 55 mg KOH/g, der Umsatz des Methylpolyethylenglykols 96%.

### Beispiel 1

In einem 2-Liter fassenden Reaktor, der mit Zulaufdosierungen, Gaseinleitungsrohr und Wasserabscheider mit Rückflußkühler ausgestattet war, wurden 583 g Wasser unter ständigem Durchleiten von Stickstoff zum Sieden unter Rückfluß erhitzt und unter Aufrechterhalten des Rückflußsiedens gleichzeitig aus 3 Zuläufen innerhalb von 6 Stunden beschickt. Zulauf 1 bestand aus 590 g Ester 1, Zulauf 2 bestand aus einer Lösung von 7,4 g Natriumperoxodisulfat in 86 g Wasser und Zulauf 3 bestand aus einer Lösung von 17 g Natriumhypophosphit in 12 g Wasser. Das Toluol, das während des Zudosierens von Zulauf 1 abdestillierte, wurde im Wasserabscheider abgetrennt. Das gleichzeitig abgeschiedene Wasser leitete man wieder in den Reaktor zurück. Nach Beendigung der Dosierung wurde das Reaktionsgemisch 2 Stunden nachpolymerisiert. Nach der Nachpolymerisation kühlte man das Reaktionsgemisch ab und neutralisierte es durch Zugabe 85 g 50%iger wäßriger Natronlauge. Der Feststoffgehalt des Reaktionsgemisches betrug 40%, der K-Wert des Copolymerisats 30,6. Der Restgehalt an Toluol lag unter 10 ppm.

Der Gehalt an unverestertem Methylpolyethylenglykol betrug 5%, bezogen auf das Polymer.

### Beispiel 2

Beispiel 1 wurde mit der Ausnahme wiederholt, daß man anstelle der Natriumhypophosphit-Lösung eine Lösung aus 17 g Natriumdisulfit in 26 g Wasser verwendete. Der Feststoffgehalt der Polymerlösung betrug 40%, der K-Wert des Polymerisats 30,0. Der Restgehalt an Toluol lag unter 10 ppm. Der Gehalt an unverestertem Methylpolyethylenglykol betrug 5%, bezogen auf das Polymer.

### Beispiel 3

Beispiel 1 wurde mit der Ausnahme wiederholt, daß 590 g Ester 2 eingesetzt wurden. Der Feststoffgehalt der Polymerlösung betrug 40%, der K-Wert des Polymerisats 29,9. Der Restgehalt an Toluol lag unter 10 ppm. Der Gehalt an unverestertem Methylpolyethylenglykol betrug 3%, bezogen auf das Polymer.

### Beispiel 4

Beispiel 1 wurde mit der Ausnahme wiederholt, daß man als Vorlage 446 g Wasser verwendete. Nach der Polymerisation und Neutralisation erhielt man eine Polymerisatlösung mit einem Feststoffgehalt von 50 Gew%. Das Copolymerisat hatte einen K-Wert von 30,9. Der Restgehalt an Toluol in der Reaktionsmischung lag unterhalb von 10 ppm. Der Gehalt an unverestertem Methylpolyethylenglykol betrug 5%, bezogen auf das Polymer.

### Beispiel 5

Beispiel 1 wurde mit der Ausnahme wiederholt, daß man 590 g des Esters 3 verwendete. Nach Neutralisation mit 38 g 50%iger wäßriger Natronlauge erhielt man eine Polymerisatlösung mit 40% Feststoffgehalt. Das Copolymerisat hatte einen K-Wert von 29,5. Der Gehalt an unverestertem Methylpolyethylenglykol betrug 3%, bezogen auf das Polymer.

### Beispiel 6

Beispiel 5 wurde mit der Ausnahme wiederholt, daß man 590 g des Esters 4 verwendete. Nach Neutralisation mit 20 g 50%iger wäßriger Natronlauge erhielt man eine Polymerisatlösung mit einem Feststoffgehalt von 40 %. Das Copolymerisat hatte einen K-Wert von 25. Der Gehalt an unverestertem Methylpolyethylenglykol betrug 4%, bezogen auf das Polymer.

### Beispiel 7

Beispiel 1 wurde mit der Ausnahme wiederholt, daß gleichzeitig mit den unveränderten Zuläufen für Ester und Natriumperoxodisulfatlösung, 5 g Natriumbisulfit in 20 g Wasser gelöst und gleichzeitig 85 g 50%ige Natronlauge zudosiert wurden. Nach 1-stündigem Nachpolymerisieren kühlte man das Reaktionsgemisch auf Raumtemperatur ab. Der Feststoffgehalt der Polymerisatlösung betrug 40%, der pH-Wert 6,7. Das Copolymerisat hatte einen K-Wert von 27.

Die nach den Beispielen 1 - 4 hergestellten Copolymerisate wurden bezüglich ihrer dispergierenden Wirkung untersucht, und zwar nach dem Mörteltest gemäß DIN 1164 bzw. EN 196.

Die dabei erhaltenen Ergebnisse sind in der Tabelle angegeben.

**Tabelle**

| | Ausbreitmaß in cm einer Mörtelmischung gemäß DIN 1164 | | | |
|---|---|---|---|---|
| | Nach 1 Minute | Nach 30 Minuten | Nach 60 Minuten | Nach 90 Minuten |
| Beispiel 1 | 21,1 | 18,6 | 17,2 | 16,4 |
| Beispiel 2 | 21,1 | 19,0 | 17,5 | 16,5 |
| Beispiel 3 | 20,7 | 17,9 | 16,7 | 16,1 |
| Beispiel 4 | 20,8 | 18,5 | 17,0 | 16,2 |

In der Tabelle ist die verflüssigende Wirkung der Polymerisate auf eine Mörtelmischung anhand der Ausbreitmaße, nach 1, 30, 60 und 90 Minuten dargestellt.

### Einsatzmengen:

| | |
|---|---|
| 500 g | Zement HD CEM J 32,5 R |
| 1350 g | CEN-Normsand |
| 225 g | Trinkwasser |

- Polymer:: 0,15 % berechnet Feststoffgehalt auf die verwendete Menge Zement; d.h. 0,75 g Polymer.
- Entschäumer:: 0,35 % bezogen auf die eingesetzte Menge Verflüssiger

## Patentansprüche

1. Verfahren zur Herstellung von wasserlöslichen Polymerisaten von Estern aus ethylenisch ungesättigten Carbonsäuren und Polyalkylenglykolen durch azeotropes Verestern in Gegenwart von organischen Lösemitteln, die mit Wasser ein Azeotrop bilden, von ethylenisch ungesättigten Carbonsäuren mit Polyalkylenglykolen, die einseitig endgruppenverschlossen sind, zu mindestens 85 Gew.-% und anschließende radikalische Polymerisation der so erhältlichen Ester gegebenenfalls zusammen mit anderen ethylenisch ungesättigten Monomeren in wäßrigem Medium, **dadurch gekennzeichnet, daß** man die organischen Lösemittel während der Polymerisation azeotrop aus dem Reaktionsgemisch abdestilliert und das abdestillierte Wasser zurückführt oder die Menge an abdestilliertem Wasser im Reaktionsgemisch durch Zufuhr von frischem Wasser ersetzt.

2. Verfahren nach Anspruch 1, **dadurch gekennzeichnet, daß** der Gehalt an organischem Lösemittel in der Monomerlösung bis zu 30 Gew.-% beträgt.

3. Verfahren nach Anspruch 1 oder 2, **dadurch gekennzeichnet, daß** der Gehalt an organischem Lösemittel in der Monomerlösung 1 bis 5 Gew.-% beträgt.

4. Verfahren nach einem der Ansprüche 1 bis 3, **dadurch gekennzeichnet, daß** man
(a) Ester der Formel 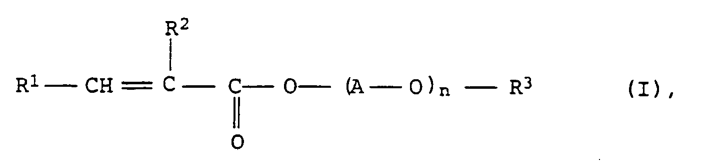 in der
R¹,R² gleich oder verschieden sind und H oder CH₃ bedeuten
A eine Alkylengruppe mit 2 bis 4 C-Atomen oder -CH₂-CH₂-CH₂-CH₂- ist,
R³ für C₁- bis C₅₀-Alkyl oder C₁- bis C₁₈-Alkylphenyl steht und
n eine Zahl von 2 bis 300 ist,
mit
(b) mindestens einer monoethylenisch ungesättigten Carbonsäure oder deren Salzen copolymerisiert.

5. Verfahren nach Anspruch 4, **dadurch gekennzeichnet, daß** man die Monomeren (a) und (b) im Gewichtsverhältnis 98 : 2 bis 2 : 98 copolymerisiert.

6. Verfahren nach einem der Ansprüche 1 bis 5, **dadurch gekennzeichnet, daß** man
(a) Acrylsäure- oder Methacrylsäureester von einseitig mit C1- bis C4-Alkyl endgruppenverschlossenen Polyalkylenglykolen mit Molmassen von 100 bis 10.000
mit
(b) Acrylsäure und/oder Methacrylsäure copolymerisiert.

7. Verfahren nach einem der Ansprüche 1 bis 6, **dadurch gekennzeichnet, daß** man
(a) Ester aus Methacrylsäure und Methylpolyethylenglykol mit Molmassen von 100 bis 10.000
mit
(b) Methacrylsäure copolymerisiert.

8. Verfahren nach einem der Ansprüche 1 bis 7, **dadurch gekennzeichnet, daß** man die Copolymerisation in Gegenwart von 0,1 bis 10 Gew.-% eines Polymerisationsreglers durchführt.

9. Verfahren nach Anspruch 8, **dadurch gekennzeichnet, daß** man als Polymerisationsregler Natriumhydrogensulfit, Natriumdisulfit, Natriumthiosulfat, Natriumhypophosphit, posphorige Säure, 2-Mercaptoethanol, Mercaptopropionsäure, Mercaptoessigsäure, Alkalimetallsalze der genannten Säuren oder Mischungen der Polymerisationsregler einsetzt.

10. Verfahren nach einem der Ansprüche 1 bis 9, **dadurch gekennzeichnet, daß** man die Säuregruppen der Polymerisate während oder nach der Polymerisation mit Basen zumindest teilweise neutralisiert.

## Claims

1. A process for the preparation of water-soluble polymers of esters of ethylenically unsaturated carboxylic acids and polyalkylene glycols by azeotropic esterification, in the presence of organic solvents which form an azeotrope with water, of ethylenically unsaturated carboxylic acids with polyalkylene oxides which are capped at one end by end groups, to a degree of at least 85 wt%, followed by free-radical polymerization of the resulting esters optionally together with other ethylenically unsaturated monomers, in aqueous medium, wherein the organic solvents are removed by azeotropic distillation from the reaction mixture during polymerization and the water that is removed by distillation is recycled or the quantity of water removed by distillation from the reaction mixture is replaced by a feed of fresh water.

2. The process according to claim 1, wherein the content of organic solvent in the monomer solution is up to 30 wt%.

3. The process according to claim 1 or claim 2, wherein the content of organic solvent in the monomer solution is from 1 to 5 wt%.

4. The process according to any of claims 1 to 3, wherein
(a) esters of the formula 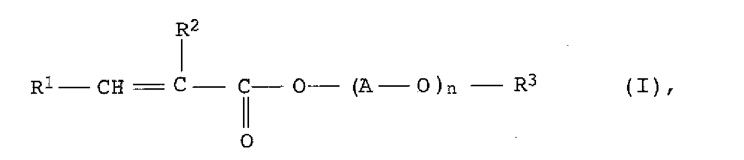 in which
R¹, R² are the same or different and denote H or CH₃
A is an alkylene group containing from 2 to 4 carbons or is -CH₂-CH₂-CH₂-CH₂-,
R³ stands for C₁-C₅₀ alkyl or C₁-C₁₈ alkylphenyl and
n is a number from 2 to 300,
are copolymerized with
(b) at least one monoethylenically unsaturated carboxylic acid or salts thereof.

5. The process according to claim 4, wherein the monomers (a) and (b) are copolymerized in a ratio, by weight, of from 98:2 to 2:98.

6. The process according to any of claims 1 to 5, wherein
(a) acrylates or methacrylates of polyalkylene glycols capped at one end by C₁-C₄ alkyl end groups and having molecular weights of from 100 to 10,000
are copolymerized with
(b) acrylic acid and/or methacrylic acid.

7. The process according to any of claims 1 to 6, wherein
(a) esters of methacrylic acid and methyl polyethylene glycol having molecular weights of from 100 to 10,000
are copolymerized with
(b) methacrylic acid.

8. The process according to any of claims 1 to 7, wherein copolymerization is carried out in the presence of from 0.1 to 10 wt% of a polymerization regulator.

9. The process according to claim 8, wherein the polymerization regulators used are sodium hydrogensulfite, sodium disulfite, sodium thiosulfate, sodium hypophosphite, phosphorous acid, 2-mercaptoethanol, mercaptopropionic acid, mercaptoacetic acid, alkali metal salts of said acids or mixtures of said polymerization regulators.

10. The process according to any of claims 1 to 9, wherein the acid groups of the polymers are at least partially neutralized with bases during or after polymerization.

## Revendications

1. Procédé de préparation de polymères solubles dans l'eau à base d'esters d'acides carboxyliques éthyléniquement insaturés et de polyalkylèneglycols, par estérification azéotropique en présence de solvants organiques, qui forment avec l'eau un azéotrope, d'acides carboxyliques éthyléniquement insaturés avec des polyalkylèneglycols bloqués d'un côté par des groupes terminaux à au moins 85 % en poids et polymérisation radicalaire subséquente des esters ainsi obtenus, le cas échéant avec d'autres monomères éthyléniquement insaturés, en milieu aqueux, **caractérisé en ce que** le solvant organique est éliminé du mélange réactionnel par distillation azéotropique pendant la polymérisation et que l'eau éliminée par distillation est recyclée ou que la quantité d'eau éliminée par distillation est remplacée dans le mélange réactionnel par apport d'eau fraîche.

2. Procédé suivant la revendication 1, **caractérisé en ce que** la teneur en solvant organique de la solution de monomères va jusqu'à 30 % en poids.

3. Procédé suivant la revendication 1 ou 2, **caractérisé en ce que** la teneur en solvant organique de la solution de monomères est de 1 à 5 % en poids.

4. Procédé suivant l'une des revendications 1 à 3, **caractérisé en ce que** l'on copolymérise
(a) des esters de la formule : 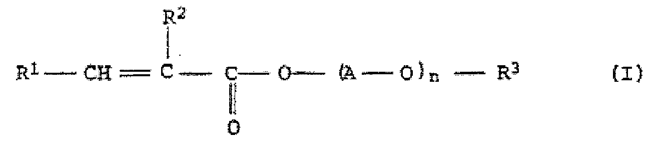 dans laquelle
R¹, R² sont identiques ou différents et représentent H ou CH₃,
A est un groupe alkylène comportant de 2 à 4 atomes de C ou représente -CH₂-CH₂-CH₂-CH₂-,
R³ représente un groupe alkyle en C₁ à C₅₀ ou alkylphényle en C₁ à C₁₈, et
n est un nombre de 2 à 300,
avec
(b) au moins un acide carboxylique monoéthyléniquement insaturé ou ses sels.

5. Procédé suivant la revendication 4, **caractérisé en ce que** l' on copolymérise les monomères (a) et (b) en proportion pondérale de 98:2 à 2:98.

6. Procédé suivant l'une des revendications 1 à 5, **caractérisé en ce que** l'on copolymérise
(a) des esters d'acide acrylique ou d'acide méthacrylique avec des polyalkylèneglycols bloqués d'un côté par des groupes terminaux alkyle en C₁ à C₄ avec des masses molaires de 100 à 10 000
avec
(b) de l'acide acrylique et/ou de l'acide méthacrylique.

7. Procédé suivant l'une des revendications 1 à 6, **caractérisé en ce que** l'on copolymérise
(a) des esters d'acide méthacrylique et du méthylpolyéthylèneglycol avec des masses molaires de 100 à 10 000
avec
(b) de l'acide méthacrylique.

8. Procédé suivant l'une des revendications 1 à 7, **caractérisé en ce que** l'on entreprend la copolymérisation en présence de 0,1 à 10 % en poids d'un régulateur de polymérisation.

9. Procédé suivant la revendication 8, **caractérisé en ce que** l'on met en oeuvre en tant que régulateurs de polymérisation de l'hydrogénosulfite de sodium, du disulfite de sodium, du thiosulfate de sodium, de l'hypophosphite de sodium, de l'acide phosphoreux, du 2-mercaptoéthanol, de l'acide mercaptopropionique, de l'acide mercaptoacétique, des sels de métaux alcalins des acides mentionnés ou des mélanges des régulateurs de polymérisation.

10. Procédé suivant l'une des revendications 1 à 9, **caractérisé en ce que** pendant ou après la polymérisation on neutralise au moins en partie les groupes acides des polymères avec des bases.
